# EUROPEAN PATENT SPECIFICATION

(11) **EP 4 320 833 B1**
(45) Date of publication and mention of the grant of the patent: **03.12.2025**
(21) Application number: 22725314.3
(22) Date of filing: 04.04.2022
(51) Int. Cl.: H04L 41/0806, H04W 8/26, H04W 76/11, H04W 60/04

(54) **METHODS, ARCHITECTURES, APPARATUSES AND SYSTEMS FOR UNIFYING EDGE CONFIGURATION SERVER PROVISIONING**
VERFAHREN, ARCHITEKTUREN, VORRICHTUNGEN UND SYSTEME ZUR VEREINHEITLICHUNG DER BEREITSTELLUNG EINES RANDKONFIGURATIONSSERVERS
PROCÉDÉS, ARCHITECTURES, APPAREILS ET SYSTÈMES POUR UNIFIER UN APPROVISIONNEMENT DE SERVEUR DE CONFIGURATION DE BORD

(30) Priority: 05.04.2021 US 202163170699 P
(43) Date of publication of application: 14.02.2024
(60) Divisional application: 25209966.8
(73) Proprietor: InterDigital Patent Holdings, Inc., Wilmington, DE 19809 (US)
(72) Inventor: ROY, Michel, Montreal, Québec H3A 3G4 (CA); OLVERA-HERNANDEZ, Ulises, Montreal, Québec H3A 3G4 (CA); GAZDA, Robert, Conshohocken, Pennsylvania 19428 (US); HERGENHAN, Scott, Collegeville, Pennsylvania 19426 (US)
(74) Representative: 2SPL Patentanwälte PartG mbB
(86) International application number: PCT/US2022/023271
(87) International publication number: WO 2022/216587

(56) References cited:
- CONVIDA WIRELESS LLC ET AL: "ECS Address Provisioning", vol. SA WG2, no. e-Meeting; 20210224 - 20210309, 9 March 2021 (2021-03-09), XP051985311, Retrieved from the Internet <URL:https://ftp.3gpp.org/tsg_sa/WG2_Arch/TSGS2_143e_Electronic/Docs/S2-2101093.zip S2-2101094.zip S2-2101094.docx> [retrieved on 20210309]
- "3rd Generation Partnership Project; Technical Specification Group Services and System Aspects; 5G System Enhancements for Edge Computing; Stage 2 (Release 17)", vol. SA WG2, no. V0.1.0, 15 March 2021 (2021-03-15), pages 1 - 29, XP052000004, Retrieved from the Internet <URL:https://ftp.3gpp.org/Specs/archive/23_series/23.548/23548-010.zip 23548-010-rm.docx> [retrieved on 20210315]
- "3 Generation Partnership Project; Technical Specification Group Services and System Aspects; Architecture for enabling Edge Applications; (Release 17)", vol. SA WG6, no. V1.4.0, 16 March 2021 (2021-03-16), pages 1 - 141, XP052000025, Retrieved from the Internet <URL:https://ftp.3gpp.org/Specs/archive/23_series/23.558/23558-140.zip 23558-140_rm.doc> [retrieved on 20210316]
- ERICSSON: "ECS address provisioning support indication in ePCO", vol. CT WG1, no. Electronic meeting; 20210225 - 20210305, 17 February 2021 (2021-02-17), XP051976323, Retrieved from the Internet <URL:https://ftp.3gpp.org/tsg_ct/WG1_mm-cc-sm_ex-CN1/TSGC1_128e/Docs/C1-210708.zip C1-210708-ecs-address-support-indication-pco-24501-v03.docx> [retrieved on 20210217]

## Description

### CROSS-REFERENCE TO RELATED APPLICATIONS

This application claims the benefit of U.S. Provisional Patent Application No. (i) 63/170,699 filed 05-Apr-2021.

### TECHNICAL FIELD

The present disclosure is generally directed to the fields of communications, software and encoding, in particular methods and apparatus directed to procedures to configure a terminal device with Edge Configuration Server (ECS) information.

### BACKGROUND

The 3GPP Technical Specification Group Service and System Aspects (SA) Working Group 6 (WG6) (SA6) has defined an SA6 architecture for enabling edge applications. Document by CONVIDA WIRELESS LLC ET AL: "ECS Address Provisioning",vol. SA WG2, no. e-Meeting; 20210224 - 20210309 9 March 2021 (2021-03-09), XP051985311, discloses that ECS address information support can be indicated by the UE.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a system diagram illustrating an example architecture for enabling edge applications;
FIG. 3 is a procedural diagram illustrating an example registration procedure;
FIG. 4A is a procedural diagram illustrating additional portions of the example registration procedure in greater detail;
FIG. 4B is a procedural diagram illustrating other additional portions of the example registration procedure in greater detail;
FIG. 5 is a diagram illustrating a representative procedure for accessing a configuration server which may be implemented by a WTRU;
FIG. 6 is a diagram illustration a representative procedure for facilitating WTRU access to a configuration server;
FIG. 7 is a diagram illustrating a representative procedure for accessing a configuration server which may be implemented by a WTRU; and
FIG. 8 is a diagram illustrating a representative procedure for accessing a configuration server which may be implemented by a WTRU.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. The invention is defined in the independent claims as appended. Advantageous features are set out in the dependent claims.

### Example Communications System

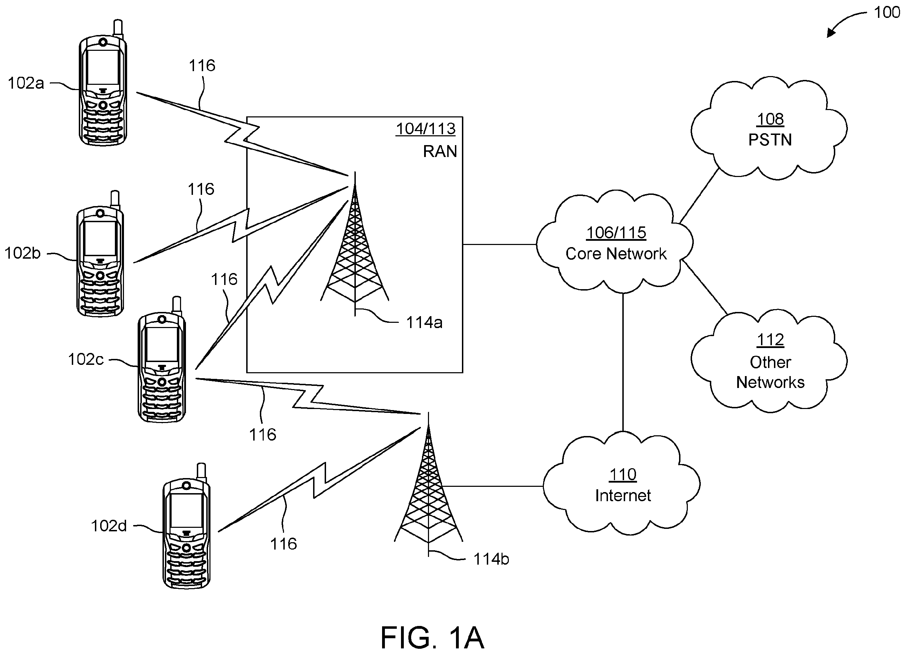

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

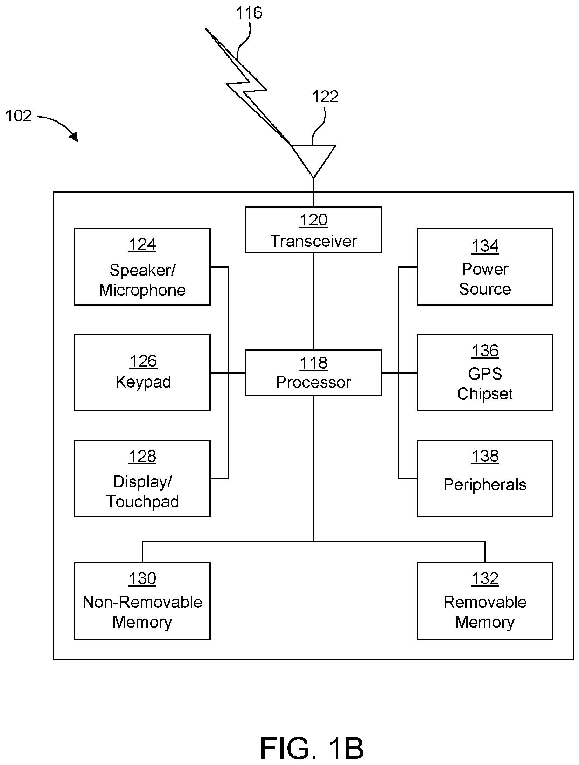

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

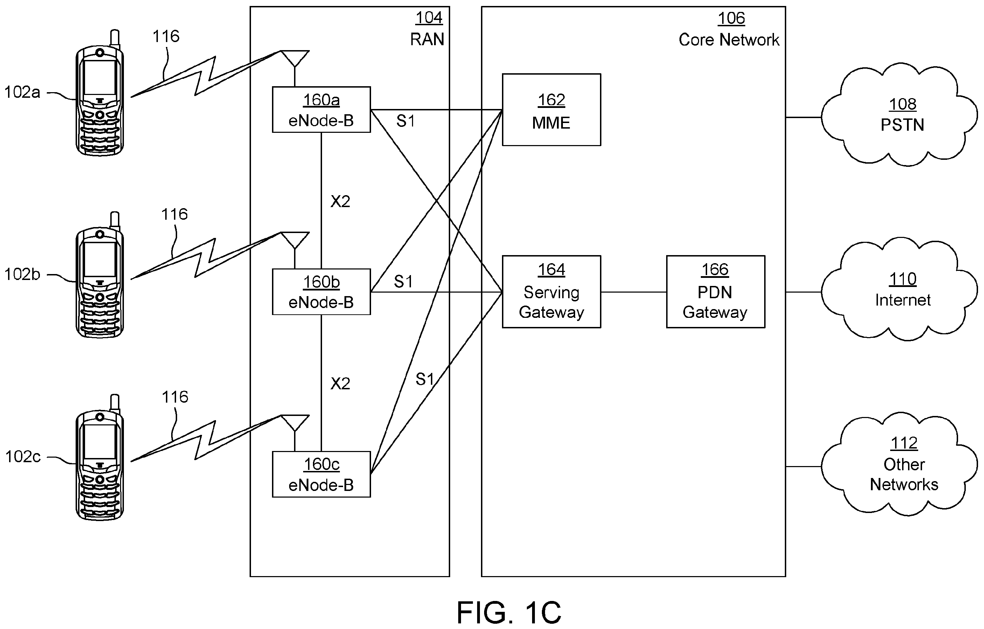

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

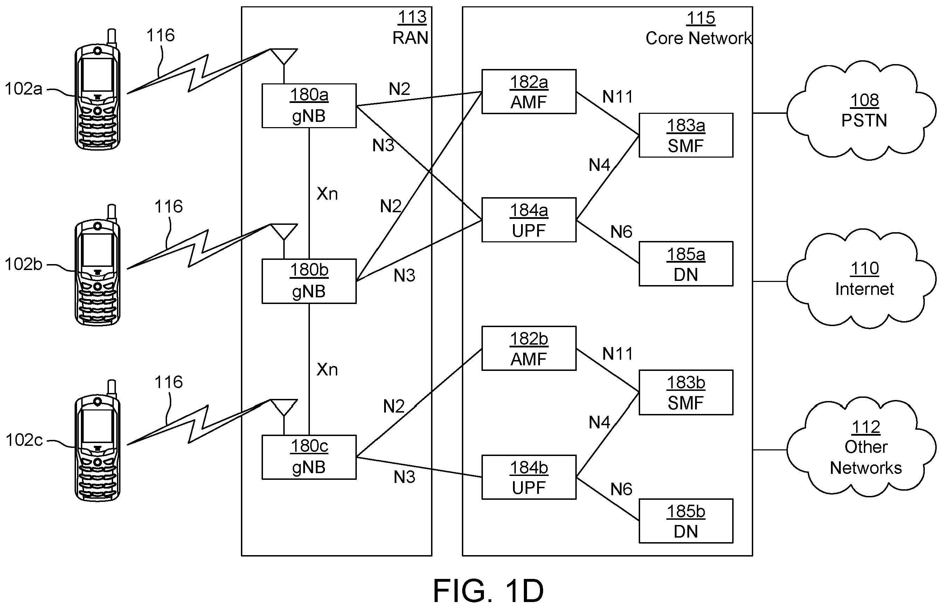

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Introduction

5G systems are expected to make edge computing a necessity. Automation of automotive vehicles, unmanned aerial vehicles, real-time Augmented Reality (AR) and immersive gaming represent only a few technologically advanced use cases that are expected to require edge computing and/or low latency support.

While edge computing may share some commonalities with cloud computing, edge computing does present unique challenges. For example, provisioning, discovery and mobility are characteristics that differ from the centrally located systems of cloud computing. To address edge computing challenges, the 3rd Generation Partnership Project (3GPP) is defining an edge enablement layer (SA6) and is modifying its core networking architecture (SA2) to support edge computing.

### Overview

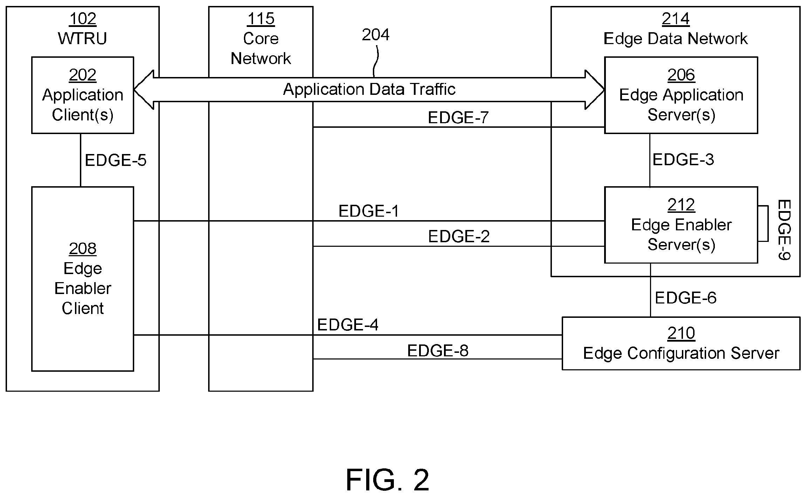

FIG. 2 is a system diagram illustrating an example architecture for enabling edge applications. 3GPP Technical Specification Group Service and System Aspects (SA) Working Group 6 (WG6) (SA6) has defined an SA6 architecture for enabling edge applications as shown in FIG. 2. In Fig. 2, one or more application clients (ACs) 202 may be user applications residing on a WTRU 102. The AC 202 may be an application that communicates data (e.g., application data traffic 204) with one or more Edge Application Servers (EASs) 206. An Edge Enabler Client (EEC) 206 may be an application residing on the WTRU 102. The EEC 208 may provide edge support to any ACs 202 on the WTRU 102. There may be a single EEC 208 for the WTRU 102 or there may be multiple EECs 208 for the WTRU 102. An Edge Configuration Server (ECS) 210 may provide supporting functions (e.g., needed) for the EEC 208 to discover an Edge Enabler Server (EES) 212 and/or connect with EAS 206. One or more ECSs 210 may be deployed to support one Edge Data Network (EDN) 214. EES 212 may provide supporting functions needed for any EAS 206 and/or EEC 208. One or more EESs 212 may be locate in the EDN 214. There may be one or more EDNs 214 in a network. In the context of mobility and/or relocation use cases, a Source-EES (S-EES) is an EES 212 used before mobility and/or relocation happens while a Target-EES (T-EES) is an EES 212 used after mobility and/or relocation has happened. An EAS 206 may be an application server residing in the EDN 214. The EAS 206 may be considered a software server providing a service to an AC 202. The ECS 210 may need to be configured in the WTRU 102 before any interactions (e.g., by the WTRU 102) may happen with edge computing. There may be multiple EASs 206 in the EDN 214. EASs 206 in different EDNs 214 may be the same EAS 206 (e.g., relating to a same edge application) and/or different EASs 206 (e.g., relating to different edge applications). An EAS 206 may be accessed by multiple ACs 202 and/or WTRUs 102. An EAS 206 may be reserved and/or used by a single AC 202 and/or WTRU 102.

An ECS address may be provisioned (e.g., to a WTRU 102) with a number of methods. For example, according to TS 23.558, an ECS address may be pre-configured on a terminal (e.g., the EEC 208 or AC 202), or configured by the user or provisioned by a mobile network operator (MNO) through a 5G Core Network (5GC) or derived from a home public land mobile network (HPLMN) or visited public land mobile network (VPLMN). However, such methods are not defined in TS 23.558 and may be considered out of scope (e.g., of SA6). As another example, according to proposals S2-2101094 and S2-2101095 in 3GPP TSG SA WG2 (SA2), an ECS address may be provisioned via the 5GC by a Protocol Configuration Options (PCO) information element used for Protocol Data Unit (PDU) session establishment. As another example, an ECS address may also be obtained via Dynamic Host Configuration Protocol (DHCP). DHCP is used to obtain an Internet Protocol (IP) address and a Domain Name System (DNS) server address.

Provisioning of an ECS address (e.g., to a WTRU 102) using pre-configured and/or user configured methods may work (e.g., prove effective) in a static environment. However, a pre-configured and/or user configured ECS address may be limiting (e.g., in terms of network flexibility). Pre-configured or user configured ECS address approaches may be error prone and/or may limit network configuration changes. To promote interoperability, ECS address provisioning should take into account roaming environments and/or network reconfigurations.

5GC ECS address configuration via the PCO may address some limitations of pre-configured or user configured ECS addresses. The 5GC ECS address configuration approach via the PCO requires a terminal (e.g., the WTRU 102) to establish a PDU session to obtain the ECS address, without specifically knowing the DNN of the ECS 210. This may result in the terminal establishing a first PDU session in order to learn the ECS address. The terminal may then have to perform updating of the PDU session or establishing a new PDU session to access the ECS data network (DN). The terminal may also have to establish another (e.g., third) PDU session to finally gain access to the DN or local area DN (LADN) where the EES 212 and/or the EAS 206 are located. Obtaining the ECS address via the PCO may require added (e.g., unnecessary) PDU session management by forcing the terminal to establish multiple (e.g., unneeded) PDU sessions to discover the ECS address.

As an IP address and DNS server address may be obtained via DHCP in a 3GPP network, the ECS address can also be provisioned via DHCP. In each of the foregoing approaches, no consideration is given that a terminal (e.g., WTRU 102) may prefer to receive an ECS address via DHCP. A unified procedure to configure a terminal with ECS information may address one or more of the foregoing deficiencies and/or provide procedures for a terminal to indicate to the network to provision an ECS address via DHCP.

### Procedures for Configuring a UE with ECS Information

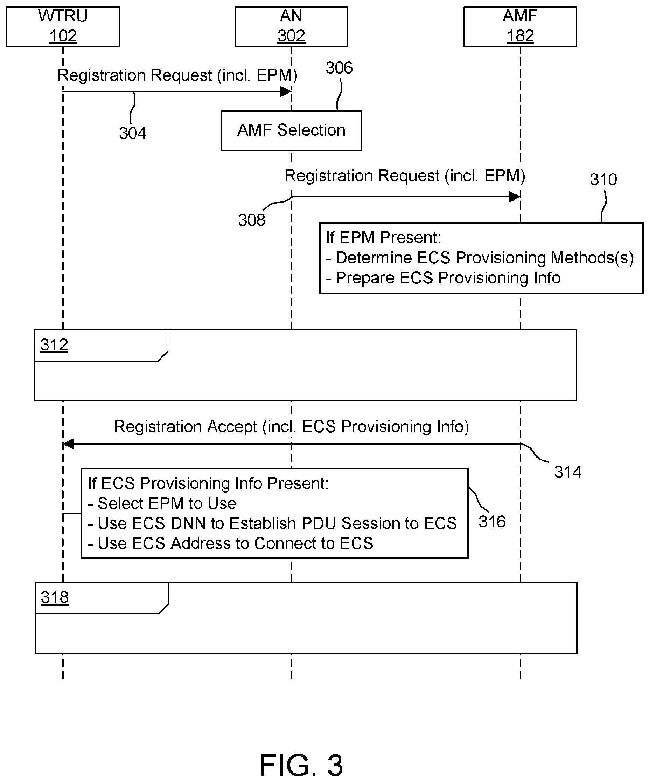

FIG. 3 is a procedural diagram illustrating an example registration procedure. TS 23.558, Clause 8.3.2 states that ECS configuration information may be obtained (e.g., provisioned) using different methods. The registration procedure in FIG. 3 provides a registration procedure which unifies different methods for configuring the ECS information in the WTRU 102. In certain representative embodiments, a WTRU 102 may discover ECS provisioning methods supported by a network by using the registration procedure in FIG. 3.

In certain representative embodiments, a network entity (e.g., an AMF 182) may be associated with a network (e.g., a core network 115) and the network may provide access to edge services (e.g., provided by servers of an EDN 214). For example, a WTRU 102 may register with the network and the network may not be not the home network of the WTRU 102, the WTRU 102 may not be configured with any DNN and/or S-NSSAI combination that may be used to establish a PDU session that would be anchored in the network (e.g., a LBO Session) and used to establish a PDU session that may be used access the network's edge services (e.g., a PDU Session that is anchored in the network of the AMF 182). As another example, a PDU Session may be established in the network, and a WTRU 102 may not be pre-configured with information that may be used to access the servers (e.g. ECS, EES, and/or EAS) that provide the edge services. The WTRU 102 may indicate to the network which EPMs may be used to send information about the network's edge services to the WTRU 102. For example, the EPMs may be indicated to the network by the WTRU 102 in a NAS Message (e.g., a Registration Request). The AMF 192 may have (e.g., previously) been provisioned with information about edge services and this information may be provided to the WTRU 102 in response to the WTRU 102 indicating the EPMs that the WTRU 102 supports. The information that is provided to the WTRU 102 may be called referred to as configuration server provisioning information. Operations, Administration and Maintenance (OAM) procedures may be used to configure the information in the AMF 182. An AF may also provision the information to a UDM via external parameter provisioning, and the AMF 182 may obtain the information from the UDM. In some embodiments, the AMF 182 may determine to only send a subset of the configuration server provisioning information that is available in the AMF 182 to the WTRU 102. The AMF 182 may determine which information to send based on an identity, home network, location, and/or supported provisioning methods (e.g., of the WTRU 102).

### Registration Request

As shown in FIG. 3, the registration procedure may begin with a WTRU 102 sending a registration request message which includes an 'ECS Provisioning Methods' (EPM) information element at 304 to an access network (AN) 302, such as a RAN 113. A Registration Request is a type of Non-Access Stratum (NAS) message. As shown in FIG. 3, the registration request at 304 is sent from the WTRU 102 to the AN 302 (e.g., RAN 113). At. 306, the AN 302 (e.g., RAN 113) may perform AMF selection. The AN 302 (e.g., RAN 113) may then forward the registration request to the selected (e.g., new) AMF 182 at 308. For example, the registration request message shown in FIG. 3 may include other information elements, such as in a registration request as described in TS 23.502, Clause 4.2.2.2. The registration request may be sent as part of an message as in the general registration procedure of TS 23.502, Clause 4.2.2.2 and may include any of the following information in the AN message: *(AN parameters, Registration Request (Registration type, SUCI or 5G-GUTI or PEI, [last visited TAI (if available)], Security parameters, [Requested NSSAI], [Mapping Of Requested NSSAI], [Default Configured* NSSAI *Indication], [UE Radio Capability Update], [UE MM Core Network Capability], [PDU Session status], [List Of PDU Sessions To Be Activated], [Follow-on request], [MICO mode preference], [Requested Active Time], [Requested DRX parameters for E-UTRA and NR], [Requested DRX parameters for NB-IoT], [extended idle mode DRX parameters], [LADN DNN(s) or Indicator* Of *Requesting LADN Information], [NAS message container], [Support for restriction* of *use of Enhanced Coverage], [Preferred Network Behaviour], [UE paging probability information], [UE Policy Container (the list* of *PSIs, indication of UE support for ANDSP and the operating system identifier)] , [UE Radio Capability ID], PEI, [ECS Provisioning Methods])).*

The 'ECS Provisioning Methods' information element (e.g., EPM) may indicate to the RAN and/or the AMF how the terminal (e.g., WTRU 102) may receive (e.g., prefer to receive) its ECS configuration.

In an example which is not part of the invention as claimed, the EPM may be omitted from the registration request. On condition that the EPM is absent (e.g., omitted from the registration request at 304), the absence of the EPM may indicate to the network (e.g., AMF 182) that the WTRU 102 does not rely on the network to obtain its ECS configuration, such as when the ECS information is pre-provisioned or user provisioned. On condition that the EPM is present (e.g., included in the registration request at 304), the presence of the EPM may indicate to the network (e.g., AMF 182) that the WTRU 102 relies on the network to provision its ECS configuration.

For example, an EPM value may indicate the ECS provisioning methods (e.g., procedures) supported by the WTRU 102. The WTRU 102 may provide multiple EPM values where multiple provisioning methods are supported by the WTRU 102. EPM values (e.g., different EPM values) may indicate any of: (1) registration request (e.g., RR-EPM) - to indicate that ECS provisioning via the registration request is supported by the terminal (e.g., WTRU 102) ; (2) PDU session establishment via PCO (e.g., PCO-EPM) - to indicate that ECS provisioning via PDU session establishment using the PCO information element is supported by the terminal; and/or (3) DHCP (e.g., DHCP-EPM) - to indicate that ECS provisioning via DHCP is supported by the terminal. In certain representative embodiments, Control Plane Cellular Internet of Things (CloT) 5GS Optimisation may be used and PDU session establishment via PCO information may be sent using Non-Access Stratum (NAS) transport (e.g., using non-IP data delivery or IP data delivery). The use of NAS transport may save User Plane resources.

At 306, the AN 302 (e.g., RAN) may perform Access and Mobility Management Function (AMF) selection. At 308, the AN 302 (e.g., RAN) may send a registration request which includes the EPM information element to the selected AMF 182 (e.g., a new AMF). On condition that the registration request sent at 308 includes the EPM (e.g., the EPM information element), the AMF 182 may proceed to determine any ECS provisioning methods and/or to prepare ECS provisioning information at 310. For example, the AMF 182 may determine which of the EPMs indicated in the registration request are supported by the network. Any of the indicated EPMs determined to be supported by the network may be included in the registration accept message sent later at in the registration procedure.

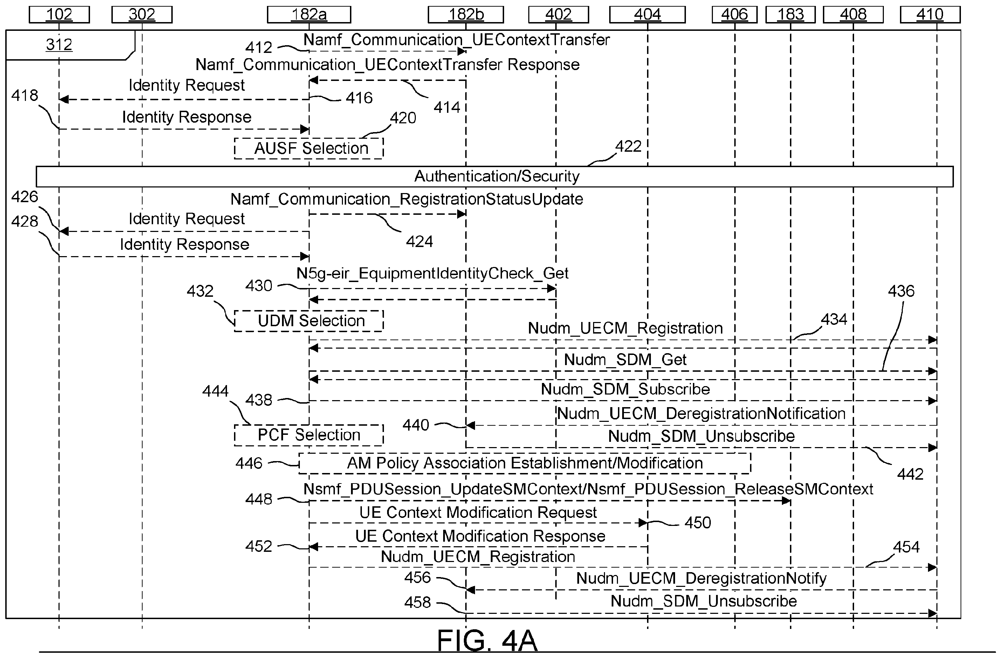

In certain representative embodiments, steps of procedure 312 may be performed as part of the registration procedure. The steps of procedure 312 are shown in greater detail in FIG. 4A. For example, the steps of procedure 312 in FIGS. 3 and 4A may be implemented as described in TS 23.502, Clause 4.2.2.2. Those skilled in the art should be familiar with the procedure described in TS 23.502, Clause 4.2.2.2. Those skilled in the art should also understand that while FIG. 4A shows a N3IWF entity, the N3IWF entity may correspond to a N3IWF/TNGF/W-AGF entity (or entities).

As shown in FIG. 4A, the procedure 312 may be performed between a WTRU 102, an 302, AMFs 182a and 182b, an equipment identity register (EIR) entity 402, a N3IWF entity 404, a policy control function (PCF) entity 406, a SMF 183, an authentication server function (AUSF) entity 408, and a unified data management (UDM) entity 410. At 412, the (e.g., new) AMF 182a may send a Namf_Communication_UEContextTransfer to the (e.g., old) AMF 182b. At 414, the (e.g., old) AMF 182b send a response to the Namf_Communication_UEContextTransfer to the (e.g., new) AMF 182a. At 416, the AMF 182a may send an identity request message to the WTRU 102. At 418, the WTRU 102 may respond with an identify response message which is sent ot the AMF 182a. At 420, the AMF 182a may decide to initiate an authentication process by selecting an AUSF entity 408. At 422, the AMF 182a may request authentication from the AUSF entity 408 or perform a NAS security procedure. At 424, the AMF 182a may send a Namf Communication_RegistrationStatusUpdate to the AMF 182b. At 426, the AMF 182a may send an Identity Request message to the WTRU 102. At 428, the WTRU 102 may respond with an Identity Response message to the AMF 182a. At 430, the AMF 182a may initiate an identity check by invoking a N5g-eir_EquipmentldentityCheck_Get service operation. At 432, the AMF 182a may select a UDM entity 410. At 434, the AMF 182a may register with the UDM entity 410 using a Nudm_UECM_Registration. At 436, the AMF 182a may retrieve Steering of Roaming information using a Nudm_SDM_Get message. At 438, the AMF 182a may subscribe to be notified using Nudm_SDM_Subscribe as to when requested data is modified. At 440, the UDM entity 410 may initiate a Nudm_UECM_DeregistrationNotification procedure with respect to the AMF 182b. At 442, the AMF 182b may unsubscribe with the UDM entity 410 for subscription data using Nudm_SDM_unsubscribe. At 444, the AMF 182a may select a PCF entity 406. At 446, the AMF 182a may perform an AM Policy Association Establishment/Modification with the PCF entity 406. At 448, the AMF 182a may invoke a Nsmf_PDUSession_UpdateSMContext with the SMF 183. At 450, the AMF 182a may send a UE Context Modification Request to the N3IWF entity 404. At 452, the N#IWF entity 404 may send a UE Context Modification Response to the AMF 182a. At 454, the AMF 182a may register with the UDM entity 410 a using Nudm_UECM_Registration (e.g., for non-3GPP access). At 456, the UDM entity 410 may initiate a Nudm_UECM_DeregistrationNotification with respect to the AMF 182b. At 458, the AMF 182b may unsubscribe with the UDM entity 410 for subscription data using a Nudm_SDM_unsubscribe message.

### Registration Accept

At 314, the new AMF may send a registration accept message which includes ECS provisioning information. The registration accept message is sent in from the AMF 182 to the WTRU 102 (e.g., via the AN 302). For example, the registration accept message may include any of the following information: (5G-*GUTI, Registration Area, [Mobility restrictions], [PDU Session status], [Allowed NSSAI], [Mapping Of Allowed NSSAI], [Configured NSSAI for the Serving PLMN], [Mapping Of Configured NSSAI], [rejected S-NSSAIs], [Pending NSSAI], [Mapping Of Pending NSSAI], [Periodic Registration Update timer], [Active Time], [Strictly Periodic Registration Timer Indication], [LADN Information], [accepted MICO mode], [IMS Voice over PS session supported Indication], [Emergency Service Support indicator], [Accepted DRX parameters for E-UTRA and NR], [Accepted DRX parameters for NB-IoT], [extended idle mode DRX parameters], [Paging Time Window], [Network support of Interworking without N26], [Access Stratum Connection Establishment NSSAI Inclusion Mode], [Network Slicing Subscription Change Indication], [Operator-defined access category definitions], [List of equivalent PLMNs], [Enhanced Coverage Restricted information], [Supported Network Behaviour], [Service Gap Time], [PLMN-assigned UE Radio Capability ID], [PLMN-assigned UE Radio Capability ID deletion], [WUS Assistance Information], [Truncated 5G-S-TMSI Configuration], [ECS Provisioning Info]).* The 'ECS Provisioning Info' may include any of the following fields (1) ECS Provisioning Method, (2) ECS data network name (DNN), and/or (3) ECS address. The 'ECS Provisioning Info' may include multiples of the foregoing when multiple ECS provisioning methods are supported by the network. The 'ECS Provisioning Info' in the registration accept message may indicate which ECS provisioning methods (e.g., EPMs) are supported by the network and/or may provide an ECS configuration to the WTRU 102 (e.g., if available).

For example, the ECS Provisioning Method field may include EPM values similar to those used in the registration request message as described above. EPM values (e.g., different EPM values) may indicate any of: (1) registration request (e.g., RR-EPM) - to indicate that ECS provisioning via a registration procedure (e.g., registration request and registration accept) is supported by the network; (2) PDU session establishment via PCO (e.g., PCO-EPM) - to indicate that ECS provisioning via PDU session establishment using the PCO information element is supported by the network; and/or (3) DHCP (e.g., DHCP-EPM) - to indicate that ECS provisioning via DHCP is supported by the network. In certain representative embodiments, the AMF 182 may report all network supported EPMs in the ECS Provisioning Information. In other representative embodiments, the AMF 182 may report (e.g., at 314) the network supported EPMs which match the ECS provisioning methods supported by the WTRU 102 (e.g., in the registration request at 304)

For example, the ECS DNN field may include a DNN where the ECS resides. The ECS DNN field may include a list of possible DNNs. The terminal (e.g., WTRU 102) may use (e.g., refer to) this field to establish a PDU session to a DN and/or LADN that provides ECS services (e.g., has an ECS 210). In certain representative embodiments, an ECS DNN may be obtained from a registration procedure (e.g., as part of a registration accept message). The obtained ECS DNN may be used in a PDU session establishment procedure via PCO. Use of the obtained ECS DNN in conjunction with the PCO information element for PDU session establishment may avoid additional (e.g., superfluous) PDU session management.

For example, the ECS address field may include an ECS address, such as an IP address and/or Universal Resource Locator (URL). The ECS address field may include a list of ECS addresses. In certain representative embodiments, the presence of the ECS address field may indicate (e.g., implicitly indicate) that the EPM-RR method is supported (e.g., is to be used by the WTRU 102).

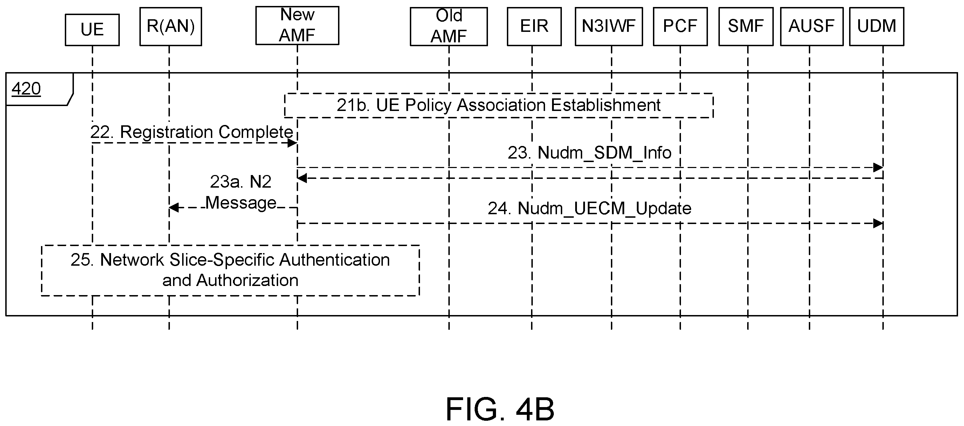

As shown in FIG. 3, upon receiving the registration accept message at 314, the WTRU 102 may determine whether any ECS provisioning information is included in the registration accept message. On condition that ECS provisioning information is included in the registration accept, the WTRU 102 may select an ECS provisioning method (e.g., from among those indicated in the registration accept) to discover the ECS 210. For example, the WTRU 102 may select among any of the RR-EPM, PCO-EPM and/or DHCP-EPM based on the EPM values in the ECS provisioning information in the registration accept. For example, on condition that the ECS DNN field is present and/or contains DNN information, the DNN information of the ECS DNN field (e.g., a selected DNN) may be used by the WTRU 102 to establish a PDU session to the ECS 210 (e.g., corresponding to the DNN). For example, on condition that the ECS address field is present and/or contains ECS address information, the ECS address information (e.g., a selected ECS address) may be used by the WTRU 102 to access (e.g., connect to) an ECS 210. When the ECS address field contains ECS URL information, the WTRU 102 may resolve the ECS URL information (e.g., a selected ECS URL) using a DNS and then access the ECS using the resolved ECS URL information (e.g., resolved IP address) to access the ECS. The procedure of 318 is shown in greater detail in FIG. 4B.

On condition that ECS provisioning information is not included in the registration accept, the WTRU 102 may determine that none of the ECS provisioning methods indicated by the 'ECS Provisioning Methods' information element (e.g., RR-EPM, PCO-EPM and/or DHCP-EPM supported by the WTRU 102) are supported by the network. For example, the WTRU 102 may proceed to use (e.g., rely on) pre-configured and/or user configured ECS configuration information in such circumstances.

### Registration Request (RR-EPM)

In certain representative embodiments, the WTRU 102 may determine to perform ECS provisioning using an ECS provisioning method (EPM) via the registration request (e.g., RR-EPM). For example, the determination may be based on an EPM value in the received ECS provisioning information indicating RR-EPM is supported (e.g., by the network) and/or the presence of the ECS address field. TheWTRU 102 may use an ECS DNN (e.g., in the received ECS provisioning information) to establish a PDU session. After the PDU session is activated, the WTRU 102 may use an ECS address (e.g., in the received ECS provisioning information) to access the ECS 210.

### PDU Session Establishment via PCO (PCO-EPM)

In certain representative embodiments, the WTRU 102 may determine to perform ECS provisioning using an ECS provisioning method (EPM) via PCO information (e.g., PCO-EPM). For example, the determination may be based on an EPM value in the received ECS provisioning information indicating PCO-EPM is supported. The WTRU 102 may use the ECS DNN indicated by the registration accept to establish a PDU session. The WTRU 102 may provide the ECS DNN (e.g., indicated by the registration accept) in a PDU session establishment request (e.g., as a WTRU requested DNN) which is sent to the AN 302 (e.g., RAN 113). The WTRU 102 may use the PCO information element when establishing the PDU session. For example, the WTRU 102 may indicate in the PCO that the WTRU 102 supports the ability to receive one or multiple ECS addresses via NAS. For example, an SMF 183 may provide an ECS Address Configuration Information to the WTRU 102, such as in a PCO. For example, the ECS Address Configuration Information may be provided as described in proposals S2-2101094 and S2-2101095. The WTRU 102 may receive the ECS Address Configuration Information during PDU session establishment and/or modification. For example, the ECS Address Configuration Information may include one or more fully-qualified domain names and/or one or more IP addresses of ECSs 210. After the PDU session is activated, the WTRU 102 may use an ECS address (e.g., received via NAS) to access the ECS 210.

### DHCP (DHCP-EPM)

In certain representative embodiments, the WTRU 102 may determine to perform ECS provisioning using an ECS provisioning method (EPM) via DHCP (e.g., DHCP-EPM). For example, the determination may be based on an EPM value in the received ECS provisioning information indicating DCHP-EPM is supported. The WTRU 102 may use a ECS DNN (e.g., in the received ECS provisioning information) to establish a PDU session. After the PDU session is activated, the WTRU 102 may trigger a DCHP procedure to obtain an ECS configuration (e.g., the ECS address). The WTRU 102 may use the obtained ECS address to access the ECS 210.

In certain representative embodiments, the WTRU 102 may establish the PDU session as described in TS 23.502, Clause 4.3.2.2 which sets forth a PDU session establishment procedure that the WTRU 102 may use to request a PDU session be established.

FIG. 4A is a procedural diagram illustrating the example registration procedure which shows 312 in FIG. 3 in greater detail and FIG. 4B is a procedural diagram illustrating the example registration procedure which shows 318 in FIG. 3 in greater detail. As shown in FIG. 3, a WTRU 102 may send a registration request message at 304 which includes an EPM information element as described herein to the AN 302 (e.g., RAN 113). At. 306, the AN 302 (e.g., RAN 113) may perform AMF selection. The AN 302 (e.g., RAN 113) may then forward the registration request to the selected (e.g., new) AMF 182 at 308.

In certain representative embodiments, 312 in FIG. 3 may be implemented as described in TS 23.502, Clause 4.2.2.2, as shown in FIG. 4A. For brevity, those skilled in the art should be familiar with the operations and functionality provided as described in TS 23.502, Clause 4.2.2.2.

In FIG. 3, the new AMF may send a registration accept message which may include ECS provisioning information at 21. as described herein. Upon receiving the registration accept at 21., the WTRU 102 may determine whether any ECS provisioning information is included in the registration accept. On condition that ECS provisioning information is included in the registration accept, the WTRU 102 may select an ECS provisioning method (e.g., from among those indicated in the registration accept) to discover the ECS. For example, the WTRU 102 may select among any of RR-EPM, PCO-EPM and DHCP-EPM based on the EPM values in the ECS provisioning information in the registration accept. For example, on condition that the ECS DNN field is present and/or contains DNN information, the DNN information of the ECS DNN field (e.g., a selected DNN) may be used by the WTRU 102 to establish a PDU session to the ECS (e.g., corresponding to the DNN). For example, on condition that the ECS address field is present and/or contains ECS address information, the ECS address information (e.g., a selected ECS address) may be used by the WTRU 102 to access (e.g., connect to) an ECS. When the ECS address field contains ECS URL information, the WTRU 102 may resolve the ECS URL information (e.g., a selected ECS URL) using a DNS and then access the ECS using the resolved ECS URL information (e.g., resolved IP address) to access the ECS.

In certain representative embodiments, procedure 318 in FIG. 3 may be performed as part of the registration procedure of FIG. 3. Procedure 318 is shown in greater detail in FIG. 4B. For example, 318 in FIGS. 3 and 4B may be implemented as described in TS 23.502, Clause 4.2.2.2. For brevity, those skilled in the art should be familiar with the operations and functionality provided by steps 21b. to 25. as described in TS 23.502, Clause 4.2.2.2.

As shown in FIG. 4B, the procedure 318 may include, at 460, the AMF 182a may perform a UE Policy Association Establishment. At 462, the WTRU 102 may send a registration complete message to the AMF 182a. At 464, the AMF 182a may provide a WTRU acknowledgement to the UDM entity 410 using Nudm_SDM_Info. At 466, the AMF 182a may the send an N2 message (e.g., RRC Inactive Assistance Information) to the AN 302. At 468, the AMF 182a may send an indication to the UDM entity 410 using Nudm_UECM_Update. At 470, the WTRU 102 may proceed to perform a Network Slice-Specific Authentication and Authorization procedure.

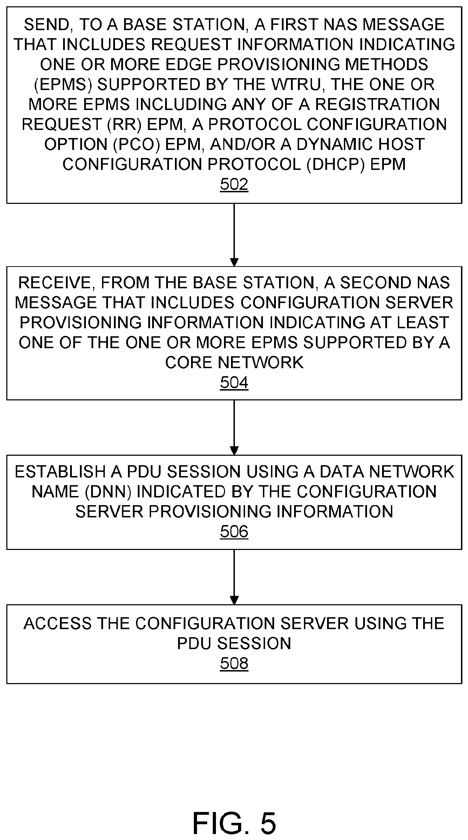

FIG. 5 is a diagram illustrating a representative procedure for accessing a configuration server which may be implemented by a WTRU 102. As shown in FIG.5, the WTRU 102 may send, to a base station, a first non-access stratum (NAS) message (e.g., a registration request message as part of an initial registration and/or registration update with a network) that includes request information indicating one or more edge provisioning methods (EPMs) supported by the WTRU at 502. For example, the one or more EPMs may include any (e.g., two or more) of the RR-EPM, the PCO-EPM, and/or the DHCP-EPM as described herein. At 504, the WTRU 102 may receive, from the base station, a second NAS message (e.g., a registration accept message as part of the initial registration and/or registration update with the network) that includes configuration server provisioning information (e.g., ECS provisioning information) indicating at least one of the one or more EPMs supported by a core network. For example, any EPMs indicated by the configuration server provisioning information may be supported by both the WTRU 102 and the core network. At 506, the WTRU 102 may establish a PDU session using a data network name (DNN) indicated by the configuration server provisioning information. For example, the DNN may be provided to the WTRU 102 using an EPM selected from the configuration server provisioning information. At 508, the WTRU 102 may access the configuration server using the PDU session (e.g., established at 506).

In certain representative embodiments, on condition that the configuration server provisioning information indicates the RR EPM, the accessing of the configuration server by the WTRU 102 may use the PDU session and an address of the configuration server indicated by the configuration server provisioning information.

In certain representative embodiments, on condition that the configuration server provisioning information indicates the PCO EPM, the DNN is indicated (e.g., to the WTRU 102) by the configuration server provisioning information. Establishing of the PDU session (e.g., by the WTRU 102) may include sending a PDU establishment request message which includes a PCO information element. The PCO information element may include information indicating support by the WTRU to receive an address of the configuration server. For example, the WTRU may support receiving the address of the configuration server via NAS signaling. For example, the WTRU may support receiving the address of the configuration server as IP data. For example, the WTRU may support receiving the address of the configuration server as non-IP data.

In certain representative embodiments, the accessing of the configuration server (e.g., by the WTRU 102) uses the PDU session and the address of the configuration server indicated by a PDU session establishment accept message associated with (e.g., establishment of) the PDU session.

In certain representative embodiments, on condition that the configuration server provisioning information indicates the DHCP EPM, the WTRU 102 may, before the accessing of the configuration server, obtain an address of the configuration server using a DHCP procedure.

In certain representative embodiments, the accessing of the configuration server (e.g., by the WTRU 102) may use the PDU session and the obtained address of the configuration server.

In certain representative embodiments, the obtaining of the address of the configuration server (e.g., by the WTRU 102) may include resolving a uniform resource locator (URL) associated with the configuration server.

In certain representative embodiments, the configuration server may be an edge configuration server (ECS) (e.g., of an EDN).

In certain representative embodiments, the first NAS message is a registration request message.

In certain representative embodiments, the second NAS message is a registration accept message.

In certain representative embodiments, the WTRU 102 may receive, from the configuration server, configuration information of an edge server of the edge network.

In certain representative embodiments, the edge server is an application server (e.g., of an EDN).

In certain representative embodiments, the WTRU 102 may, after receiving the configuration information of the edge server, access the edge server using the configuration information of the edge server.

In certain representative embodiments, the first NAS message may be sent as part of any of an initial registration procedure and/or a registration update procedure (e.g., for registering the WTRU 102 with the network).

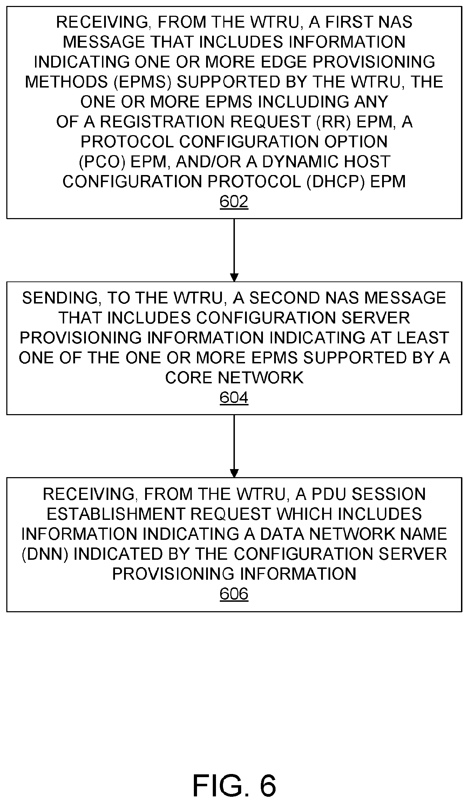

FIG. 6 is a diagram illustration a representative procedure for facilitating WTRU access to a configuration server. In FIG. 6, a network entity may perform the procedure to facilitate WTRU access to the configuration server which is associated with connecting to (e.g., server(s) of an edge data network. At 602, the network entity may receive, from a WTRU 102, a first NAS message including request information indicating one or more EPMs supported by the WTRU 102. For example, the one or more EPMs may include any (e.g., two or more) of a RR-EPM, a PCO-EPM, and/or a DHCP-EPM as described herein. At 604, the network entity may send, to the WTRU 102, a second NAS message including configuration server provisioning information indicating at least one of the one or more EPMs supported by a core network. For example, any EPMs indicated by the configuration server provisioning information may be supported by both the WTRU 102 and the core network. At 606, the network entity may receive, from the WTRU 102, a PDU session establishment request which includes information indicating a data network name (DNN) indicated by and/or obtained using the configuration server provisioning information as described herein.

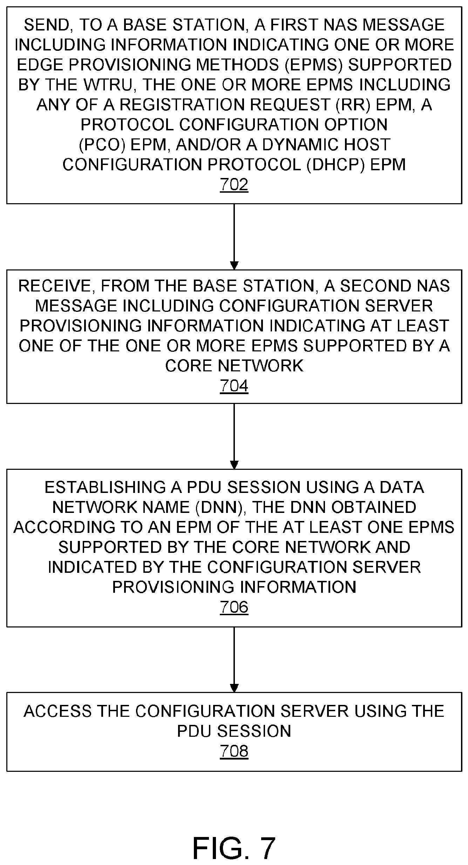

FIG. 7 is a diagram illustrating a representative procedure for accessing a configuration server which may be implemented by a WTRU 102. As shown in FIG. 7, at 702, the WTRU 102 may send, to a base station, a first NAS message (e.g., a registration request as part of an initial registration and/or registration update with a network) that includes information indicating one or more edge provisioning methods (EPMs) supported by the WTRU at 502. For example, the one or more EPMs may include any (e.g., two or more) of the RR-EPM, the PCO-EPM, and/or the DHCP-EPM as described herein. At 704, the WTRU 102 may receive, from the base station, a second NAS message (e.g., a registration accept as part of the initial registration and/or registration update with the network) that includes configuration server provisioning information (e.g., ECS provisioning information) indicating at least one of the one or more EPMs supported by a core network. For example, any EPMs indicated by the configuration server provisioning information may be supported by both the WTRU 102 and the core network. At 706, the WTRU 102 may establish a PDU session using a data network name (DNN). For example, the DNN may be obtained according to an EPM of the at least one EPMS supported by the core network and indicated by the configuration server provisioning information. At 708, the WTRU 102 may access the configuration server using the PDU session (e.g., established at 706).

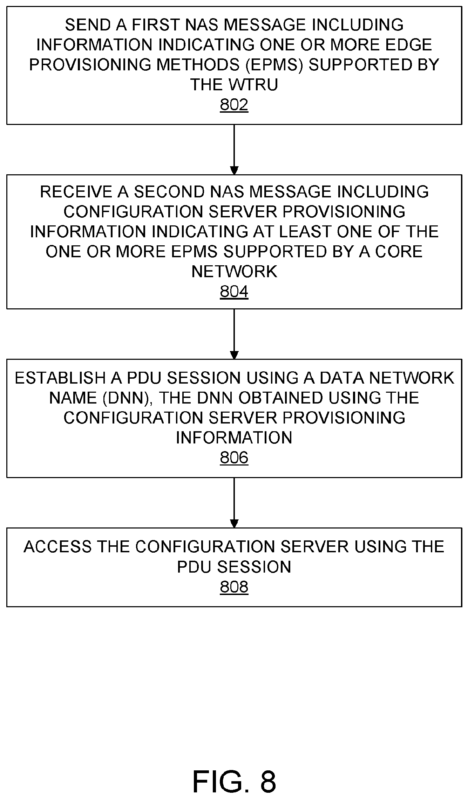

FIG. 8 is a diagram illustrating a representative procedure for accessing a configuration server which may be implemented by a WTRU 102. As shown in FIG. 8, the WTRU 102 may send, to a base station, a first NAS message (e.g., as part of an initial registration and/or registration update with a network) that includes information indicating one or more EPMs supported by the WTRU at 802. For example, the one or more EPMs may include any (e.g., two or more) of the RR-EPM, the PCO-EPM, and/or the DHCP-EPM as described herein. At 7804, the WTRU 102 may receive, from the base station, a second NAS message (e.g., as part of the initial registration and/or registration update with the network) including configuration server provisioning information (e.g., ECS provisioning information) indicating at least one of the one or more EPMs supported by a core network. For example, any EPMs indicated by the configuration server provisioning information may be supported by both the WTRU 102 and the core network. At 806, the WTRU 102 may establish a PDU session using a data network name (DNN). For example, the DNN may be obtained according to an EPM of the at least one EPMS supported by the core network and indicated by the configuration server provisioning information as described herein. At 808, the WTRU 102 may access the configuration server using the PDU session (e.g., established at 806).

In certain representative embodiments, a method may be implemented by a WTRU 102 that includes sending, to a base station connected to a network, ECS provisioning method (EPM) information. For example, the EPM information may indicate (e.g., to the network) one or more WTRU capabilities of the WTRU to obtain ECS configuration information. The WTRU 102 may perform receiving, from the base station, of ECS provisioning information. For example, the ECS provisioning information may indicate one or more of the WTRU indicated capabilities (e.g., which may be used by the WTRU 102 and/or are supported by the network) to obtain the ECS configuration information. The WTRU 102 may proceed with obtaining the ECS configuration information based on the received ECS provisioning information. After, the WTRU 102 may proceed with accessing an ECS using the obtained ECS configuration information.

For example, the EPM information may indicate (e.g., explicitly or implicitly) that the WTRU 102 is capable of obtaining the ECS configuration information from the received ECS provisioning information as one of the one or more WTRU capabilities to obtain ECS configuration information. The received ECS provisioning information may include the ECS configuration information.

For example, the EPM information may indicate that the WTRU is capable of obtaining the ECS configuration information using a Protocol Configuration Option (PCO) information element as one of the one or more WTRU capabilities to obtain the ECS configuration information. The received ECS provisioning information may indicate using the PCO information element as one of the one or more of the WTRU capabilities to obtain the ECS configuration information which are supported by the network.

For example, the WTRU 102 may, on condition that the received ECS provisioning information indicates using the PCO information element, send a first PCO information element to the base station, and receive a second PCO information element from the base station which includes the ECS configuration information. As an example, the WTRU 102 may send a PDU session establishment request message which includes the sending of the first PCO information element. The WTRU 102 may receive a PDU session establishment accept message which includes the receiving of the second PCO information element.

For example, the EPM information may indicate that the WTRU 102 is capable of obtaining the ECS configuration information using Dynamic Host Configuration Protocol (DHCP) as one of the one or more of the WTRU capabilities to obtain the ECS configuration information which are supported by the network. The received ECS provisioning information may indicate using DHCP. As an example, the WTRU 102 may, on condition that the received ECS provisioning information indicates using DHCP, trigger a DCHP procedure which includes the obtaining of the ECS configuration information based on the received ECS provisioning information.

For example, the received ECS provisioning information may further indicate a data network name of the ECS.

For example, the WTRU 102 may send registration request information to the base station according to a registration procedure, and the registration request information may include the EPM information. The EPM information may include one or more index values indicating (e.g., explicitly or implicitly) the one or more WTRU capabilities to obtain the ECS configuration information.

For example, the WTRU 102 may receive registration accept information from the base station according to a registration procedure. The registration accept information may include the ECS provisioning information.

In certain representative embodiments, a WTRU 102 may include at least a transceiver and a processor which are configured to send, to a base station connected to a network, Edge Configuration Server (ECS) provisioning methods (EPM) information. The EPM information may indicate (e.g., explicitly or implicitly) one or more WTRU capabilities to obtain ECS configuration information. The WTRU 102 may
receive, from the base station, ECS provisioning information which indicates (e.g., explicitly or implicitly) one or more of the WTRU indicated capabilities to obtain the ECS configuration information which are supported by the network. The WTRU 102 may obtain the ECS configuration information based on the received ECS provisioning information. After, the WTRU 102 may access an ECS using the obtained ECS configuration information.

For example, the EPM information may indicate (e.g., explicitly or implicitly) that the WTRU 102 is capable of obtaining the ECS configuration information from the received ECS provisioning information as one of the one or more WTRU capabilities to obtain ECS configuration information. The received ECS provisioning information may include the ECS configuration information.

For example, the EPM information may indicate that the WTRU is capable of obtaining the ECS configuration information using a Protocol Configuration Option (PCO) information element as one of the one or more WTRU capabilities to obtain the ECS configuration information. The received ECS provisioning information may indicate using the PCO information element as one of the one or more of the WTRU capabilities to obtain the ECS configuration information which are supported by the network.

For example, the WTRU 102 may, on condition that the received ECS provisioning information indicates using the PCO information element, send a first PCO information element to the base station, and receive a second PCO information element from the base station which includes the ECS configuration information. As an example, the WTRU 102 may send a PDU session establishment request message which includes the sending of the first PCO information element. The WTRU 102 may receive a PDU session establishment accept message which includes the receiving of the second PCO information element.

For example, the EPM information may indicate that the WTRU 102 is capable of obtaining the ECS configuration information using Dynamic Host Configuration Protocol (DHCP) as one of the one or more of the WTRU capabilities to obtain the ECS configuration information which are supported by the network. The received ECS provisioning information may indicate using DHCP. As an example, the WTRU 102 may, on condition that the received ECS provisioning information indicates using DHCP, trigger a DCHP procedure which includes the obtaining of the ECS configuration information based on the received ECS provisioning information.

For example, the received ECS provisioning information may further indicate a data network name of the ECS.

For example, the WTRU 102 may send registration request information to the base station according to a registration procedure, and the registration request information may include the EPM information. The EPM information may include one or more index values indicating (e.g., explicitly or implicitly) the one or more WTRU capabilities to obtain the ECS configuration information.

For example, the WTRU 102 may receive registration accept information from the base station according to a registration procedure. The registration accept information may include the ECS provisioning information.

### Conclusion

The invention is defined in the independent claims as appended. Advantageous features are set out in the dependent claims.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

## Claims

1. A method implemented by a wireless transmit/receive unit, WTRU, (103) to access a configuration server associated with connecting to an edge network, the method comprising:
sending, to a base station, a Non-Access Stratum, NAS, registration request message (304) that includes request information indicating one or more edge provisioning methods, EPMs, supported by the WTRU, the one or more EPMs including any of a registration request, RR, EPM, a protocol configuration option, PCO, EPM, and/or a dynamic host configuration protocol, DHCP, EPM;
receiving, from the base station, a NAS registration accept message (314) that includes configuration server provisioning information indicating at least one of the one or more EPMs supported by a core network;
establishing a PDU session using a data network name, DNN, indicated by the configuration server provisioning information; and
accessing the configuration server using the PDU session.

2. The method of claim 1, wherein the accessing of the configuration server uses the PDU session and an address of the configuration server indicated by the configuration server provisioning information based on the configuration server provisioning information indicating the RR EPM.

3. The method of claim 1, wherein the DNN and the PCO EPM are indicated by the configuration server provisioning information, and the establishing of the PDU session includes sending a PDU establishment request message which includes a PCO information element that includes information indicating support by the WTRU to receive an address of the configuration server.

4. The method of claim 3, wherein the accessing of the configuration server uses the PDU session and the address of the configuration server indicated by a PDU session establishment accept message associated with the PDU session.

5. The method of claim 1, further comprising: before the accessing of the configuration server, obtaining an address of the configuration server using a DHCP procedure based on the configuration server provisioning information indicating the DHCP EPM.

6. A wireless transmit/receive unit, WTRU, comprising:
a processor, a memory, and a transceiver which are configured to:
send, to a base station, a NAS registration request message (304) that includes request information indicating one or more edge provisioning methods, EPMs, supported by the WTRU, the one or more EPMs including any of a registration request, RR, EPM, a protocol configuration option, PCO, EPM, and/or a dynamic host configuration protocol, DHCP, EPM,
receive, from the base station, a NAS registration accept message (314) that includes configuration server provisioning information indicating at least one of the one or more EPMs supported by a core network,
establish a PDU session using a data network name, DNN, indicated by the configuration server provisioning information, and
access a configuration server, associated with connecting to an edge network, using the PDU session.

7. The WTRU of claim 6, wherein the processor, the memory, and the transceiver are configured to access the configuration server using the PDU session and an address of the configuration server indicated by the configuration server provisioning information based on the configuration server provisioning information indicating the RR EPM.

8. The WTRU of claim 6, wherein the DNN and the PCO EPM are indicated by the configuration server provisioning information, and
wherein the processor, the memory, and the transceiver are configured to establish the PDU session which includes to send a PDU establishment request message including a PCO information element that includes information indicating support by the WTRU to receive an address of the configuration server.

9. The WTRU of claim 8, wherein the processor, the memory, and the transceiver are configured to access the configuration server using the PDU session and the address of the configuration server indicated by a PDU session establishment accept message associated with the PDU session.

10. The WTRU of claim 6, wherein the processor, the memory, and the transceiver are configured to, before the accessing of the configuration server, obtain an address of the configuration server using a DHCP procedure based on the configuration server provisioning information indicating the DHCP EPM.

11. The WTRU of claim 10, wherein the processor, the memory, and the transceiver are configured to access the configuration server using the PDU session and the obtained address of the configuration server.

12. The WTRU of claim 10-11, wherein the processor, the memory, and the transceiver are configured to obtain the address of the configuration server by resolving a uniform resource locator, URL, associated with the configuration server.

13. The WTRU of any one of claims 6-12, wherein the configuration server is an edge configuration server, ECS.

14. The WTRU of any one of claims 6-13, wherein the processor, the memory, and the transceiver are configured to:
receive, from the configuration server, configuration information of an edge application server of the edge network, and
accessing the edge application server.

15. The WTRU of any one of claims 6-14, wherein the NAS registration request message is sent as part of any of an initial registration procedure or a registration update procedure.

## Patentansprüche

1. Ein Verfahren, das von einer drahtlosen Sende-/Empfangseinheit, WTRU, (103) implementiert wird, um auf einen Konfigurationsserver zuzugreifen, der dem Verbinden mit einem Edge-Netzwerk zugeordnet ist, wobei das Verfahren umfasst:
Senden, an eine Basisstation, einer Non-Access Stratum-, NAS-, Registrierungsanforderungsnachricht (304), die Anforderungsinformationen umfasst, die ein oder mehrere Edge-Bereitstellungsverfahren, EPMs, anzeigen, die von der WTRU unterstützt werden, wobei das eine oder die mehreren EPMs eines von einem Registration Request-, RR-, EPM, einem Protocol Configuration Option-, PCO-, EPM und/oder einem Dynamic Host Configuration Protocol-, DHCP-, EPM umfassen;
Empfangen, von der Basisstation, einer NAS-Registrierungsannahmenachricht (314), die Konfigurationsserver-Bereitstellungsinformationen umfasst, die mindestens eines des einen oder der mehreren EPMs anzeigen, die von einem Kernnetzwerk unterstützt werden;
Aufbauen einer PDU-Sitzung unter Verwendung eines Datennetzwerknamens, DNN, der von den Konfigurationsserver-Bereitstellungsinformationen angezeigt wird; und
Zugreifen auf den Konfigurationsserver unter Verwendung der PDU-Sitzung.

2. Das Verfahren nach Anspruch 1, wobei das Zugreifen auf den Konfigurationsserver die PDU-Sitzung und eine Adresse des Konfigurationsservers verwendet, die von den Konfigurationsserver-Bereitstellungsinformationen basierend auf den Konfigurationsserver-Bereitstellungsinformationen angezeigt werden, die das RR-EPM anzeigen.

3. Das Verfahren nach Anspruch 1, wobei der DNN und das POD-EPM von den Konfigurationsserver-Bereitstellungsinformationen angezeigt werden und das Aufbauen der PDU-Sitzung das Senden einer PDU-Aufbauanforderungsnachricht umfasst, die ein PCO-Informationselement umfasst, das Informationen umfasst, die die Unterstützung durch die WTRU anzeigen, um eine Adresse des Konfigurationsservers zu empfangen.

4. Das Verfahren nach Anspruch 3, wobei das Zugreifen auf den Konfigurationsserver die PDU-Sitzung und die Adresse des Konfigurationsservers verwendet, die von einer PDU-Sitzungsaufbauannahmenachricht angezeigt werden, die der PDU-Sitzung zugeordnet ist.

5. Das Verfahren nach Anspruch 1, ferner umfassend: vor dem Zugreifen auf den Konfigurationsserver, ein Erhalten einer Adresse des Konfigurationsservers unter Verwendung einer DHCP-Prozedur basierend auf den Konfigurationsserver-Bereitstellungsinformationen, die das DHCP-EPM anzeigen.

6. Eine drahtlose Sende-/Empfangseinheit, WTRU, umfassend:
einen Prozessor, einen Speicher und einen Sendeempfänger, die konfiguriert sind zum:
Senden, an eine Basisstation, einer NAS-Registrierungsanforderungsnachricht (304), die Anforderungsinformationen umfasst, die ein oder mehrere Edge-Bereitstellungsverfahren EPMs, anzeigen, die von der WTRU unterstützt werden, wobei das eine oder die mehreren EPMs eines von einem Registration Request-, RR-, EPM, einem Protocol Configuration Option-, PCO-, EPM und/oder einem Dynamic Host Configuration Protocol-, DHCP-, EPM umfassen,
Empfangen, von der Basisstation, einer NAS-Registrierungsannahmenachricht (314), die Konfigurationsserver-Bereitstellungsinformationen umfasst, die mindestens eines des einen oder der mehreren EPMs anzeigen, die von einem Kernnetzwerk unterstützt werden,
Aufbauen einer PDU-Sitzung unter Verwendung eines Datennetzwerknamens, DNN, der von den Konfigurationsserver-Bereitstellungsinformationen angezeigt wird, und
Zugreifen auf einen Konfigurationsserver, der dem Verbinden mit einem Edge-Netzwerk zugeordnet ist, unter Verwendung der PDU-Sitzung.

7. Die WTRU nach Anspruch 6, wobei der Prozessor, der Speicher und der Sendeempfänger konfiguriert sind, um auf den Konfigurationsserver unter Verwendung der PDU-Sitzung und einer Adresse des Konfigurationsservers zuzugreifen, die von den Konfigurationsserver-Bereitstellungsinformationen basierend auf den Konfigurationsserver-Bereitstellungsinformationen angezeigt werden, die das RR-EPM anzeigen.

8. Die WTRU nach Anspruch 6, wobei der DNN und das PCO-EPM von den Konfigurationsserver-Bereitstellungsinformationen angezeigt werden, und
wobei der Prozessor, der Speicher und der Sendeempfänger konfiguriert sind, um die PDU-Sitzung aufzubauen, die das Senden einer PDU-Aufbauanforderungsnachricht umfasst die ein PCO-Informationselement umfasst, das Informationen umfasst, die die Unterstützung durch die WTRU anzeigen, um eine Adresse des Konfigurationsservers zu empfangen.

9. Die WTRU nach Anspruch 8, wobei der Prozessor, der Speicher und der Sendeempfänger konfiguriert sind, um auf den Konfigurationsserver unter Verwendung der PDU-Sitzung und der Adresse des Konfigurationsservers zuzugreifen, die von einer PDU-Sitzungsaufbauannahmenachricht angezeigt werden, die der PDU-Sitzung zugeordnet ist.

10. Die WTRU nach Anspruch 6, wobei der Prozessor, der Speicher und der Sendeempfänger konfiguriert sind, um vor dem Zugreifen auf den Konfigurationsserver eine Adresse des Konfigurationsservers unter Verwendung einer DHCP-Prozedur basierend auf den Konfigurationsserver-Bereitstellungsinformationen zu erhalten, die das DHCP-EPM anzeigen.

11. Die WTRU nach Anspruch 10, wobei der Prozessor, der Speicher und der Sendeempfänger konfiguriert sind, um auf den Konfigurationsserver unter Verwendung der PDU-Sitzung und der erhaltenen Adresse des Konfigurationsservers zuzugreifen.

12. Die WTRU nach Anspruch 10-11, wobei der Prozessor, der Speicher und der Sendeempfänger konfiguriert sind, um die Adresse des Konfigurationsservers durch Auflösen eines Uniform Resource Locator, URL, zu erhalten, der dem Konfigurationsserver zugeordnet ist.

13. Die WTRU nach einem der Ansprüche 6-12, wobei der Konfigurationsserver ein Edge-Konfigurationsserver, ECS, ist.

14. Die WTRU nach einem der Ansprüche 6-13, wobei der Prozessor, der Speicher und der Sendeempfänger konfiguriert sind zum:
Empfangen, von dem Konfigurationsserver, von Konfigurationsinformationen eines Edge-Anwendungsservers des Edge-Netzwerks, und
Zugreifen auf den Edge-Anwendungsserver.

15. Die WTRU nach einem der Ansprüche 6-14, wobei die NAS-Registrierungsanforderungsnachricht als Teil eines von einer anfänglichen Registrierungsprozedur oder einer Registrierungsaktualisierungsprozedur gesendet wird.

## Revendications

1. Procédé mis en œuvre par une unité d'émission/réception sans fil, WTRU, (103) pour accéder à un serveur de configuration associé à une connexion à un réseau périphérique, le procédé comprenant le fait de :
envoyer, à une station de base, un message de demande d'enregistrement de strate de non-accès, NAS, (304) qui inclut des informations de demande indiquant un ou plusieurs procédés d'approvisionnement de périphérie, EPMs, pris en charge par la WTRU, les un ou plusieurs EPM incluant l'un parmi une EPM de demande d'enregistrement, RR, une EPM d'option de configuration de protocole, PCO, et/ou une EPM de protocole de configuration d'hôte dynamique, DHCP ;
recevoir, à partir de la station de base, un message d'acceptation d'enregistrement NAS (314) qui inclut des informations d'approvisionnement de serveur de configuration indiquant au moins l'un des un ou plusieurs EPMs pris en charge par un réseau central ;
établir une session PDU en utilisant un nom de réseau de données, DNN, indiqué par les informations d'approvisionnement de serveur de configuration ; et
accéder au serveur de configuration en utilisant la session PDU.

2. Procédé selon la revendication 1, dans lequel l'accès au serveur de configuration utilise la session PDU et une adresse du serveur de configuration indiquée par les informations d'approvisionnement de serveur de configuration sur la base des informations d'approvisionnement de serveur de configuration indiquant l'EPM RR.

3. Procédé selon la revendication 1, dans lequel le DNN et l'EPM POD sont indiqués par les informations d'approvisionnement de serveur de configuration, et l'établissement de la session PDU inclut l'envoi d'un message de demande d'établissement PDU qui inclut un élément d'informations PCO qui inclut des informations indiquant une prise en charge par la WTRU pour recevoir une adresse du serveur de configuration.

4. Procédé selon la revendication 3, dans lequel l'accès au serveur de configuration utilise la session PDU et l'adresse du serveur de configuration indiquée par un message d'acceptation d'établissement de session PDU associé à la session PDU.

5. Procédé selon la revendication 1, comprenant en outre : avant l'accès au serveur de configuration, le fait d'obtenir une adresse du serveur de configuration en utilisant une procédure DHCP sur la base des informations d'approvisionnement de serveur de configuration indiquant l'EPM DHCP.

6. Unité d'émission/réception sans fil, WTRU, comprenant :
un processeur, une mémoire et un émetteur-récepteur qui sont configurés pour :
envoyer, à une station de base, un message de demande d'enregistrement NAS (304) qui inclut des informations de demande indiquant un ou plusieurs procédés d'approvisionnement de périphérie, EPMs, pris en charge par la WTRU, les un ou plusieurs EPMs incluant l'un parmi une EPM de demande d'enregistrement, RR, une EPM d'option de configuration de protocole, PCO, et/ou une EPM de protocole de configuration d'hôte dynamique, DHCP,
recevoir, à partir de la station de base, un message d'acceptation d'enregistrement NAS (314) qui inclut des informations d'approvisionnement de serveur de configuration indiquant au moins l'un des un ou plusieurs EPMs pris en charge par un réseau central,
établir une session PDU en utilisant un nom de réseau de données, DNN, indiqué par les informations d'approvisionnement de serveur de configuration, et
accéder à un serveur de configuration, associé à une connexion à un réseau périphérique, en utilisant la session PDU.

7. WTRU selon la revendication 6, dans lequel le processeur, la mémoire et l'émetteur-récepteur sont configurés pour accéder au serveur de configuration en utilisant la session PDU et une adresse du serveur de configuration indiquée par les informations d'approvisionnement de serveur de configuration sur la base des informations d'approvisionnement de serveur de configuration indiquant l'EPM RR.

8. WTRU selon la revendication 6, dans lequel le DNN et l'EPM PCO sont indiqués par les informations d'approvisionnement de serveur de configuration, et
dans lequel le processeur, la mémoire et l'émetteur-récepteur sont configurés pour établir la session PDU qui inclut l'envoi d'un message de demande d'établissement PDU incluant un élément d'informations PCO qui inclut des informations indiquant une prise en charge par la WTRU pour recevoir une adresse du serveur de configuration.

9. WTRU selon la revendication 8, dans lequel le processeur, la mémoire et l'émetteur-récepteur sont configurés pour accéder au serveur de configuration en utilisant la session PDU et l'adresse du serveur de configuration indiquée par un message d'acceptation d'établissement de session PDU associé à la session PDU.

10. WTRU selon la revendication 6, dans lequel le processeur, la mémoire et l'émetteur-récepteur sont configurés pour, avant l'accès au serveur de configuration, obtenir une adresse du serveur de configuration en utilisant une procédure DHCP sur la base des informations d'approvisionnement de serveur de configuration indiquant l'EPM DHCP.

11. WTRU selon la revendication 10, dans lequel le processeur, la mémoire et l'émetteur-récepteur sont configurés pour accéder au serveur de configuration en utilisant la session PDU et l'adresse obtenue du serveur de configuration.

12. WTRU selon les revendications 10-11, dans lequel le processeur, la mémoire et l'émetteur-récepteur sont configurés pour obtenir l'adresse du serveur de configuration en résolvant un localisateur uniforme de ressources, URL, associé au serveur de configuration.

13. WTRU selon l'une des revendications 6-12, dans lequel le serveur de configuration est un serveur de configuration périphérique, ECS.

14. WTRU selon l'une des revendications 6-13, dans lequel le processeur, la mémoire et l'émetteur-récepteur sont configurés pour :
recevoir, du serveur de configuration, des informations de configuration d'un serveur d'application périphérique du réseau périphérique, et
accéder au serveur d'application périphérique.

15. WTRU selon l'une des revendications 6-14, dans lequel le message de demande d'enregistrement NAS est envoyé en tant que partie de l'une parmi une procédure d'enregistrement initial ou une procédure de mise à jour d'enregistrement.
